Europäisches Patentamt

European Patent Office

Office européen des brevets

(11) Veröffentlichungsnummer: **0 273 221 B1**

## (12) EUROPÄISCHE PATENTSCHRIFT

(45) Veröffentlichungstag der Patentschrift: **27.11.91**

(51) Int. Cl.⁵: **F16L 47/06**, F16L 21/02

(21) Anmeldenummer: **87117797.8**

(22) Anmeldetag: **02.12.87**

(54) **Rohrverbinder aus Muffe und Einsteckteil.**

(30) Priorität: **31.12.86 DE 3644834**

(43) Veröffentlichungstag der Anmeldung:
**06.07.88 Patentblatt 88/27**

(45) Bekanntmachung des Hinweises auf die
Patenterteilung:
**27.11.91 Patentblatt 91/48**

(84) Benannte Vertragsstaaten:
**AT BE CH ES FR GB IT LI NL SE**

(56) Entgegenhaltungen:
**DD-A- 120 076**
**DE-A- 2 800 406**
**FR-A- 1 421 264**
**FR-A- 2 376 986**

(73) Patentinhaber: **Dipl.-Ing. Dr. Ernst Vogelsang
GmbH & Co. KG
Industriestrasse 2
W-4352 Herten/Westfalen(DE)**

(72) Erfinder: **Vogelsang, Horst
Zwickauer Strasse 12
W-4352 Herten/Westf.(DE)**

(74) Vertreter: **Andrejewski, Walter et al
Patentanwälte Andrejewski, Honke & Partner
Postfach 10 02 54 Theaterplatz 3
W-4300 Essen 1(DE)**

Rank Xerox (UK) Business Services

## Beschreibung

Die Erfindung bezieht sich gattungsgemäß auf einen Rohrverbinder aus Muffe, Dichtungsbauteil und Einsteckteil, insbesondere für Kunststoffrohr, wobei die Muffe ein Eingangsführungsteilstück, in Endführungsteilstück sowie eine Aufweitung für das zum Rohrverbinder gehörendes Dichtungsbauteil aufweist, welche Aufweitung aus einer Aufnahmerille für einen Haltering, und einer Dichtungskammer für einen mit dem Haltering verbundenen, im nicht gekuppelten Zustand in Einsteckrichtung trichterförmig zusammenlaufenden Dichtungskonus des Dichtungsbauteils besteht und der Haltering auf seiner Innenseite eine umlaufende Kompressionsrippe besitzt, die zumindest zum Eingangsführungsteilstück hin mit einer Abschrägung versehen ist, die sich bis zur einschubseitigen Flanke des Halteringes als schräggeneigte Fläche fortsetzt, wobei der Haltering mit Hilfe des Einsteckteils über die Kompressionsrippe in die Aufnahmerille gedrückt ist, die ebenso wie der Haltering trapezförmigen Querschnitt aufweist, wobei ferner die Kompressionsrippe in Einschubrichtung des Einsteckteils hinter dem Mittelpunkt des trapezförmigen Querschnittes von Aufnahmerille und Haltering angeordnet ist und die einschubseitige Flanke der Aufnahmerille länger ist als die zugeordnete Flanke des Halteringes. - Rohrverbinder dieser Art haben sich bewährt. Sie werden bei erdverlegten Rohrleitungen eingesetzt, insbesondere bei Kabelschutzrohren oder Kabelführungsrohren. Sie sind als Zweiphasen-Rohrverbinder bekannt, weil das Dichtungsbauteil aus Haltering und Dichtungskonus eine doppelte Funktion erfüllt. Die Kompressionsrippe des Halteringes bewirkt beim Einschieben des Einsteckteils zunächst eine Zentrierung des Einsteckteils, der Dichtungskonus bewirkt danach hauptsächlich eine Abdichtung.

Bei dem bekannten gattungsgemäßen Rohrverbinder (DE-A-28 00 406) ist der Dichtungskonus zwar ein flexibles Element, jedoch als einteiliges Vollprofil aus Gummi gestaltet. Gummi ist bekanntlich inkompressibel. Daraus resultieren verhältnismäßig große Einschubkräfte beim Einschieben des Einsteckteils in die Muffe. Reduziert man die Wanddicke des Dichtungskonus, so würde man die Dichtwirkung beeinträchtigen.

Bei einer anderen bekannten Ausführung (DD-A-120 076) ist der Haltering ein an dem äußeren Ende des Dichtungsbauteils angeformter Flansch, der sich an der Stirnseite der Muffe abstützen soll und Axialkräfte, die beim Einschieben des Einsteckendes auftreten, auf das Muffenende übertragen soll. Dementsprechend führt das Halteteil keine Kippbewegung aus. Es soll und kann die Bewegung des Dichtungsbauteils, welches aus gleichlangen, äußeren und inneren Dichtlippen besteht, nicht beeinflussen. Zweck der Teilung der Dichtlippen ist es, einen größeren radialen Verformungsweg des Dichtungsbauteils insgesamt beim Einschieben des Einsteckendes zu erhalten.

Der Erfindung liegt die Aufgabe zugrunde, einen gattungsgemäßen Rohrverbinder so weiter auszubilden, daß die zum Einschieben des Einsteckendes erforderliche Einschubkraft reduziert wird, die Dichtwirkung jedoch nicht beeinträchtigt ist.

Diese Aufgabe wird dadurch gelöst, daß von dem Haltering in Einschubrichtung eine erste, den Dichtungskonus bildende, muffenwandseitige Dichtungslippe ausgeht, die in der Dichtungskammer an der Rohrleitung anliegt, und daß von dem Haltering in gleicher Richtung eine zweite, rohrachsenseitige Dichtungslippe ausgeht, die die erste Dichtungslippe zur Rohrachse hin, im nichtgekuppelten Zustand mit Abstandsringspalt überfaßt und in Einschubrichtung überragt sowie mit der schnabelförmigen Abbiegung an der Innenseite der Dichtungskammer anliegt. Die muffenwandseitige Dichtungslippe kann zwei oder mehr als zwei umlaufende, muffenwandseitige Dichtungsrippen aufweisen. Die rohrachsenseitige Dichtungslippe ist nach bevorzugter Ausführungsform der Erfindung im Bereich vor der schnabelförmigen Abbiegung mit zwei oder mehr als zwei umlaufenden rohrachsenseitigen Dichtungsrippen versehen.

Bei einem erfindungsgemäßen Rohrverbinder verläuft die muffenwandseitige Dichtungslippe im allgemeinen mehr oder weniger parallel zur Rohrachse bzw. Muffenachse. Das gilt sowohl für den nichtgekuppelten Zustand als auch für den gekuppelten Zustand. Demgegenüber ist die rohrachsenseitige Dichtungslippe in der beschriebenen Weise ein wenig trichterförmig zusammengezogen. Eine bevorzugte Ausführungsform der Erfindung ist dadurch gekennzeichnet, daß die rohrachsenseitige Dichtungslippe beim Einschieben des Einsteckteils auf die muffenwandseitige Dichtungslippe preßbar ist. Es empfiehlt sich, die Anordnung so zu treffen, daß der Abstandsringspalt im Übergangsbereich zwischen Haltering und Dichtungskonus beginnt.

Die erreichten Vorteile sind darin zu sehen, daß bei dem erfindungsgemäßen Rohrverbinder bei vorgegebener Dichtwirkung die Einschubkraft für das Einsteckteil beachtlich reduziert ist, die Dichtwirkung also nicht beeinträchtigt ist. Es läßt sich sogar eine Verbesserung der Dichtwirkung erreichen, die dann eintritt, wenn sich der Abstandsringspalt mit Druckwasser füllt, so daß dessen hydrostatischer Druck die Dichtkraft vergrößert. Um die Einschubkraft weiter zu reduzieren, kann die Kompressionsrippe in ihrer radialen Bauhöhe gegenüber der bekannten Ausführungsform reduziert werden.

Im folgenden wird die Erfindung anhand einer lediglich ein Ausführungsbeispiel darstellenden Zeichnung ausführlicher erläutert. Es zeigen in schematischer Darstellung

Fig. 1 eine Längsschnitt durch einen erfindungsgemäßen Rohrverbinder,

Fig. 2 in gegenüber der Fig. 1 wesentlich vergrößertem Maßstab den Querschnitt des Dichtungsbauteils ausdem Gegenstand nach Fig. 1 im nicht eingebauten Zustand.

Der in den Figuren dargestellte Rohrverbinder besteht aus einer Muffe 1 und aus einem Einsteckteil 2. Beide Teile können an angeschlossene Rohre angeformt sein. Insbesondere handelt es sich um Kunststoffrohre, und zwar um solche, die als Kabelschutz-, Kabelführungs- oder Druckwasserrohre eingesetzt werden.

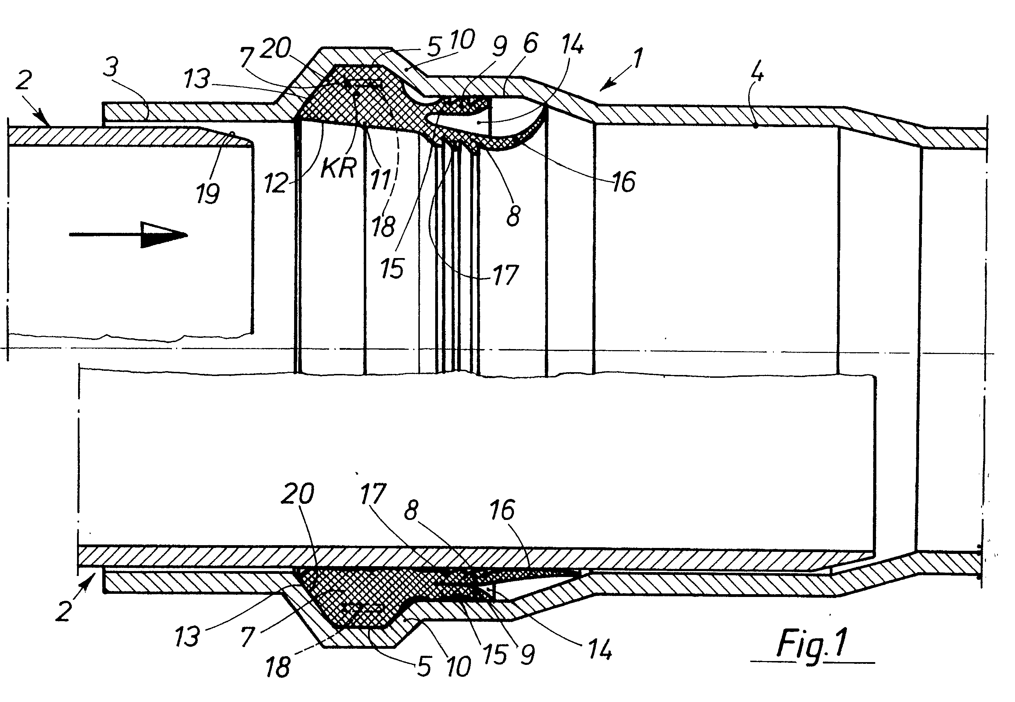

In der Fig. 1 ist im oberen Teil der Figur der nichtgekuppelte Zustand des erfindungsgemäßen Rohrverbinders, beim Einschieben des Einsteckteils dargestellt, im unteren Teil der gekuppelte Zustand. Der in der Fig. 1 dargestellte Rohrverbinder ist z.B. für Druckwasserrohr bestimmt. Die Muffe 1 ihrerseits weist ein Eingangsführungsteilstück 3, ein Endführungsteilstück 4 sowie eine Aufweitung 4, 6 auf. Die Aufweitung 5, 6 ist zweistückig ausgeführt. Sie besteht aus einer Aufnahmerille 5 für den Haltering 7 eines eingelegten Dichtungsbauteils, welches aus Gummi, Kunststoff oder ähnlichen Werkstoffen besteht. Sie besteht fernerhin aus einer Dichtungskammer 6 für den mit dem Haltering 7 verbundenen Dichtungskonus 8, 9 des Dichtungsbauteils. Ein schräge Übergangsteil 10 verbindet beide Teilstücke der Aufweitung 5, 6. Es versteht sich von selbst, daß der Dichtungskonus 8, 9 an den Haltering 7 angeformt ist. - Die Aufnahmerille 5 sowie der Haltering 7 besitzen trapezförmigen Querschnitt.

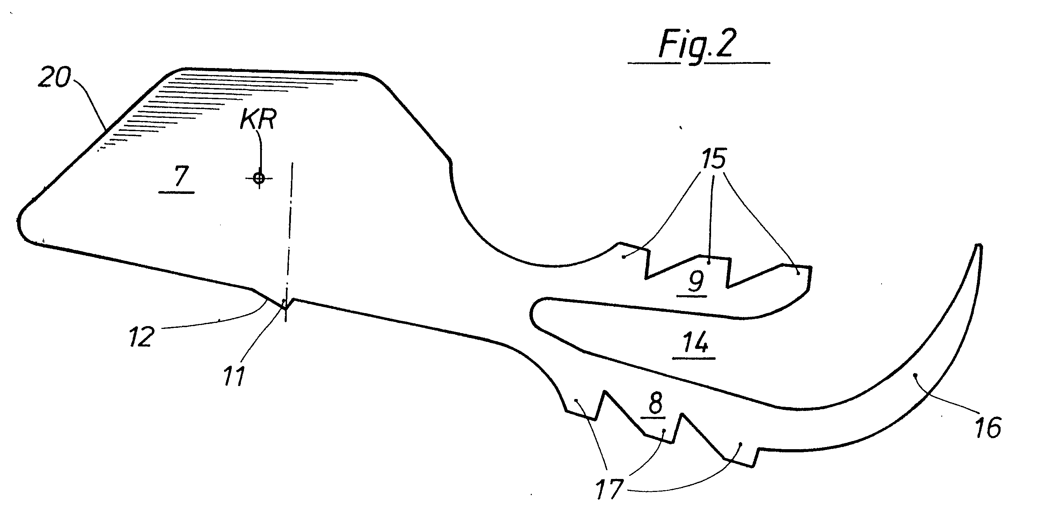

Aus einer vergleichenden Betrachtung von Oberteil und Unterteil der Fig. 1 entnimmt man, daß der Haltering 7 auf seiner Innenseite eine umlaufende Kompressionsrippe 11 besitzt, die zumindest zum Eingangsführungsteilstück 3 hin mit einer Anschrägung 12 versehen ist, die sich bis zur Flanke 13 der Aufnahmerille 5, wenn auch mit geringerer Neigung, fortsetzt. Das hat zur Folge, daß die lichte Weite des Halteringes 7 in diesem Bereich größer ist als die lichte Weite im Eingangsführungsteilstück 3 der Muffe 1 und im Außendurchmesser des Einsteckteils 2. Im übrigen ist die Anordnung so getroffen, daß der Haltering 7 mit Hilfe des Einsteckteils 2 über eine Kompression und Verformung der Kompressionsrippe 11 in die Aufnahmerille 5 gedrückt wird und folglich bei der Einführungsbewegung des Einsteckteils 2 eine aktive Festlegung in der Aufnahmerille 5 erfährt. Dazu liegt im Ausführungsbeispiel die Kompressionsrippe 11 in Einschubrichtung des Einsteckteils 2 hinter dem Mittelpunkt KR des trapezförmigen Querschnitts von Aufnahmerille 5 bzw. Haltering 7. Der Dichtungskonus besteht aus zwei Dichtungslippen 8, 9 mit unterschiedlichem radialen Niveau. Zwischen den Dichtungslippen 8, 9 ist im nichtgekuppelten Zustand (vgl. Fig. 1 oben, Fig. 2) ein umlaufender Abstandsringspalt 14 angeordnet. Die Anordnung ist so getroffen, daß die rohrachsenseitige Dichtungslippe 8 in Einsteckrichtung die muffenwandseitige Dichtungslippe 9 überragt. Sie ist im übrigen schnabelförmig bis auf das radiale Niveau der muffenwandseitigen Dichtungslippe 9 gebogen. Im Ausführungsbeispiel besitzt die muffenwandseitige Dichtungslippe 9 drei umlaufende, muffenwandseitige Dichtungsrippen 15. Die rohrachsenseitige Dichtungslippe 8 besitzt im Bereich vor der schnabelförmigen Abbiegung 16 im Ausführungsbeispiel ebenfalls drei umlaufende, hier rohrachsenseitige Dichtungsrippen 17. Aus dem unteren Teil der Fig. 1 entnimmt man, daß die rohrachsenseitige Dichtungslippe 8 beim Einschieben des Einsteckteils 2 auf die muffenwandseitige Dichtungslippe 9 preßbar ist. Der Abstandsringspalt 14 beginnt im Übergangsbereich zwischen Haltering 7 und Dichtungskonus 8, 9.

Aus dem oberen Teil der Fig. 1 und insbesondere aus der Fig. 2 entnimmt man, daß die Dichtungslippe 8, die im nichtgekuppelten Zustand in Einsteckrichtung trichterförmig zusammengeführt ist, eine angeformte Abbiegung 16 aufweist, die gegenüber der Dichtungslippe 8 konisch erweitert ist und die auch im nichtgekuppelten Zustand an der Innenwand der Dichtungskammer 6 anliegt. Folglich ist der Abstandsringspalt 14 im nichtgekuppelten Zustand verschlossen und lose Bodenteile können in diesen Abstandsringspalt 14 nicht eintreten. Eine Labyrinthdichtung kommt zustande, wenn das Einsteckteil 2 vollständig eingeschoben ist, und entsteht durch die Anlage der Dichtungsrippen 15, 17 an der Oberseite des Einsteckteils 2 einerseits, an der Innenseite der Dichtungskammer 6 andererseits. Nur angedeutet wurde in der Figur, daß der Haltering 7 zusätzlichen Stützring 18 (z.B. aus Federstahl oder Kunststoff) aufweisen kann, der in den Haltering 7 eingebettet, z.B. einvulkanisiert ist.

Der Winkel der Anschrägung an der Kompressionsrippe 11 des Halteringes 7 und der Winkel einer zugeordneten Fase 19 an Einsteckteil 2 sind so gewählt, daß sie bei der Einschubbewegung des Einsteckteils 2 in die Muffe 1 außerhalb des Bereiches der Selbsthemmung liegen. Die Flanke 13 ist länger als die zugeordnete Flanke 20 am Haltering. Dadurch wird vermieden, daß beim Einstecken des Einsteckteils 2 nach Passieren des Eingangsführungsteilstückes 3 das Einsteckteil 2 unmittelbar auf den Haltering 7 stößt und ein Verkanten hervorrufen könnte. Im Rahmen der Erfindung liegt es, daß Einsteckteil 2 im Bereich des Eingangsführungsteilstückes 3 und bei 4 zu verkleben.

Um sicherzustellen, daß die Dichtungslippe 8 im nichtgekuppelten Zustand eine genau vorgegebene Position einnimmt, ist es zweckmäßig, bei großdimensionierten Rohrabmessungen in den Haltering 7 einen Stützring 18 einzubetten. Der Stützring kann als Federstahlring 18 ausgebildet oder aus hart eingestelltem Kunststoff oder dergleichen bestehen. Der Stützring 18 wirkt stabilisierend und stellt sicher, daß die Dichtungslippen 8, 9 wie beschrieben sicher funktionieren und daß diese Funktion nicht dadurch beeinträchtigt wird, daß sich der Haltering 7 in der Aufnahmerille 5 verschiebt.

## Patentansprüche

1. Rohrverbinder aus Muffe (1), Dichtungsbauteil und Einsteckteil (2), insbesondere für Kunststoffrohre, wobei die Muffe (1) ein Eingangsführungsteilstück (3), ein Endführungsteilstück (4) sowie eine Aufweitung (5, 6) für das Dichtungsbauteil aufweist, welche Aufweitung aus einer Aufnahmerille (5) für einen Haltering (7) und einer Dichtungskammer (6) für einen mit dem Haltering (7) verbundenen, im nicht gekuppelten Zustand in Einsteckrichtung trichterförmig zusammenlaufenden Dichtungskonus (8, 9) des Dichtungsbauteils besteht und der Haltering (7) auf seiner Innenseite eine umlaufende Kompressionsrippe (11) besitzt, die zumindest zum Eingangsführungsteilstück (3) hin mit einer Abschrägung (12) versehen ist, die sich bis zur einschubseitigen Flanke (13) des Halteringes (7) als schräggeneigte Fläche fortsetzt, wobei der Haltering (7) mit Hilfe des Einsteckteils (2) über die Kompressionsrippe (11) in die Aufnahmerille (5) gedrückt ist, die ebenso wie der Haltering (7) trapezförmigen Querschnitt aufweist, wobei ferner die Kompressionsrippe (11) in Einschubrichtung des Einsteckteils (2) hinter dem Mittelpunkt des trapezförmigen Querschnittes von Aufnahmerille (5) und Haltering (7) angeordnet ist und die einschubseitige Flanke (13) der Aufnahmerille (7) länger ist als die zugeordnete Flanke (20) des Halteringes (7), **dadurch gekennzeichnet,** daß von dem Haltering (7) in Einschubrichtung eine erste, den Dichtungskonus bildende, muffenwandseitige Dichtungslippe (9) ausgeht, die in der Dichtungskammer (6) an der Rohrleitung anliegt, und daß von dem Haltering (7) in gleicher Richtung eine zweite rohrachsenseitige Dichtungslippe (8) ausgeht, die die erste Dichtungslippe (9) zur Rohrachse hin, im nichtgekuppelten Zustand mit Abstandsringspalt (14) überfaßt und in Einschubrichtung überragt sowie mit der schnabelförmigen Abbiegung (16) an der Innenseite der Dichtungskammer (6) anliegt.

2. Rohrverbinder nach Anspruch 1, dadurch gekennzeichnet, daß die muffenwandseitige Dichtungslippe (9) zwei oder mehr als zwei umlaufende, muffenseitige Dichtungsrippen (15) aufweist.

3. Rohrverbinder nach einem der Ansprüche 1 oder 2, dadurch gekennzeichnet, daß die rohrachsenseitige Dichtungslippe (8) im Bereich vor der schnabelförmigen Abbiegung (16) zwei oder mehr als zwei umlaufende rohrachsenseitige Dichtungsrippen (17) aufweist.

4. Rohrverbinder nach einem der Ansprüche 1 bis 3, dadurch gekennzeichnet, daß die rohrachsenseitige Dichtungslippe (8) beim Einschieben des Einsteckteils (2) auf die muffenwandseitige Dichtungslippe (9) preßbar ist.

5. Rohrverbinder nach einem der Ansprüche 1 bis 4, dadurch gekennzeichnet, daß der Abstandsringspalt (14) im Übergangsbereich zwischen Haltering (7) und Dichtungskonus (8, 9) beginnt.

6. Rohrverbinder nach einem der Ansprüche 1 bis 5, dadurch gekennzeichnet, daß sich in dem Haltering (7) ein Stützring (18) befindet.

## Claims

1. A pipe connector consisting of a socket (1), a sealing component and an insert part (2), particularly for plastics pipes, in which the socket (1) possesses an entry guidance piece (3), an end guidance piece (4) and a recess (5, 6) for the sealing component, which recess consists of a reception groove (5) for a retaining ring (7) and of a sealing chamber (6) for a sealing cone (8, 9) of the sealing component, the sealing cone being connected to the retaining ring (7) and in the uncoupled condition converging in funnel shape in the insertion direction, and the retaining ring (7) possessing a peripheral compression rib (11) on its inner surface, that at least on the side facing the entry guidance piece (3) is provided with a facet (12) that continues as far as the flank (13) on the insertion side of the retaining ring (7) as a somewhat oblique surface, in which by means of the insert part (2) the retaining ring (7) is pressed via the compression rib (11) into the reception groove (5) which similarly to the retaining ring (7) has a trapezium-shaped cross-section, in which moreover the compression rib (11) is located beyond the central point of the trapezium-shaped cross-section of the reception groove (5) and retaining ring (7) in the direction that the insert part (2) is pushed in, and the flank (13) on the insertion side of the reception groove (5) is longer than the associated flank (20) of the retaining ring (7), *characterized in that* a first sealing lip (9) forming the sealing cone on the socket wall side projects from the retaining ring (7) in the pushing-in direction and lies against the pipeline in the sealing chamber (6), and that a second sealing lip (8) on the pipe axis side projects from the retaining ring (7) in the same direction, which in the uncoupled state passes over the first sealing lip (9) on the pipe axis side forming an annular clearance gap (14), extends beyond it in the pushing-in direction and by its beak-shaped bend (16) lies against the inside of the sealing chamber (6).

2. A pipe connector according to Claim 1, *characterized in that* the sealing lip (9) on the socket wall side possesses two or more than two peripheral socket wall side sealing ribs (15).

3. A pipe connector according to one of Claims 1 or 2, *characterized in that* the sealing lip (8) on the pipe axis side possesses two or more peripheral pipe axis side sealing ribs (17) in the region before the beak-shaped bend (16).

4. A pipe connector according to one of Claims 1 to 3, *characterized in that* the sealing lip (8) on the pipe axis side can be compressed against the sealing lip (9) on the socket wall side as the insert part (2) is pushed in.

5. A pipe connector according to one of Claims 1 to 4, *characterized in that* the annular clearance gap (14) begins in the transitional region between the retaining ring (7) and the sealing cone (8, 9).

6. A pipe connector according to one of Claims 1 to 5, *characterized in that* a support ring (18) exists in the retaining ring (7).

**Revendications**

1. Raccord de tuyaux constitué d'un manchon (1), d'un élément d'étanchéité et d'un embout mâle (2), notamment pour des tuyaux en matière plastique, le manchon (1) présentant une partie de guidage initial (3), une partie de guidage final (4) et une partie élargie (5,6) pour l'élément d'étanchéité, la partie élargie étant constituée d'une gorge réceptrice (5) pour une bague de retenue (7) et d'un compartiment d'étanchéité (6) pour un cône d'étanchéité (8,9) de l'élément d'étanchéité qui est assemblé à la bague de retenue (7) et qui, à l'état non accouplé, se rétrécit en entonnoir dans la direction d'emboîtement, et la bague de retenue (7) possédant sur son côté intérieur une nervure de compression entourante (11) qui est munie, au moins vers la partie de guidage initial (3), d'un chanfreinage (12) qui se prolonge, sous la forme d'une surface inclinée en oblique, jusqu'au flanc (13) du côté d'emboîtement de la bague de retenue (7), la bague de retenue (7) étant pressée à l'aide de l'embout mâle (2) et par l'intermédiaire de la nervure de compression (11) dans la gorge réceptrice (5) qui présente, de même que la bague de retenue (7), une section trapézoïdale, la nervure de compression (11) étant disposée, dans la direction d'emboîtement de l'embout mâle (2), après le centre de la section trapézoïdale de la gorge réceptrice (5) et de la bague de retenue (7), et le flanc (13) du côté d'emboîtement de la gorge réceptrice (7) étant plus long que le flanc associé (20) de la bague de retenue (7), **caractérisé** en ce qu'une première lèvre d'étanchéité (9), qui se trouve du côté de la paroi du manchon et qui constitue le cône d'étanchéité, part de la bague de retenue (7) dans la direction d'emboîtement et s'applique contre le tuyau dans le compartiment d'étanchéité (6), et en ce qu'une seconde lèvre d'étanchéité (8), qui se trouve du côté de l'axe du tuyau, part de la bague de retenue (7) dans la même direction et, à l'état non accouplé, recouvre avec un espace d'écartement annulaire (14) la première lèvre d'étanchéité (9) en direction de l'axe du tuyau et en dépasse dans la direction d'emboîtement, et s'applique également, par une partie coudée en forme de bec (16), contre le côté inférieur du compartiment d'étanchéité (6).

2. Raccord de tuyaux selon la revendication 1, caractérisé en ce que la lèvre d'étanchéité (9), qui se trouve du côté de la paroi du manchon, présente deux ou plus de deux nervures d'étanchéité entourantes (15) du côté du manchon.

3. Raccord de tuyaux selon la revendication 1 ou 2, caractérisé en ce que la lèvre d'étanchéité (8), qui se trouve du côté de l'axe du tuyau, présente dans la région située avant la partie coudée en forme de bec (16) deux ou plus de deux nervures d'étanchéité entourantes (17) du côté de l'axe du tuyau.

4. Raccord de tuyaux selon l'une des revendications 1 à 3, caractérisé en ce que la lèvre d'étanchéité (8), qui se trouve du côté de l'axe du tuyau, peut être comprimée lors de l'emboîtement de l'embout mâle (2) sur la lèvre d'étanchéité (9) qui se trouve du côté de la paroi du manchon.

5. Raccord de tuyaux selon l'une des revendications 1 à 4, caractérisé en ce que l'espace d'écartement annulaire (14) commence dans la région de transition entre la bague de retenue (7) et le cône d'étanchéité (8,9).

6. Raccord de tuyaux selon l'une des revendications 1 à 5, caractérisé en ce qu'une bague de soutien (18) se trouve dans la bague de retenue (7).

Fig.1

EP 0 273 221 B1

*Fig.2*